# EUROPÄISCHE PATENTSCHRIFT

(11) **EP 1 598 685 B1**
(45) Veröffentlichungstag und Bekanntmachung des Hinweises auf die Patenterteilung: **14.05.2008**
(21) Anmeldenummer: 05008841.8
(22) Anmeldetag: 22.04.2005
(51) Int. Cl.: G02B 6/38

(54) **Einrichtung für eine optische Steckverbindung**
Device for an optical plug-in connection
Dispositif pour un raccordement optique enfichable

(30) Priorität: 21.05.2004 DE 102004025512
(43) Veröffentlichungstag der Anmeldung: 23.11.2005
(60) Teilanmeldung: 06025916.5
(73) Patentinhaber: Neutrik Aktiengesellschaft, 9494 Schaan (LI)
(72) Erfinder: Dobler, Oliver, 6774 Tschagguns (AT); Kunkel, Peter, 9495 Triesen (LI)
(74) Vertreter: Hofmann, Ralf U.

(56) Entgegenhaltungen:
- EP-A- 0 570 652
- EP-A- 1 020 743
- EP-A- 1 180 702
- EP-A- 1 331 499
- DE-A1- 10 108 783

## Beschreibung

Die Erfindung betrifft eine Kabel-Steckerschutzeinheit mit den Merkmalen des Oberbegriffs des Patentanspruchs 1.

Zur Herstellung von optischen Verbindungen zwischen Lichtleitern werden optische Steckverbindungen eingesetzt, wobei ein Einsteckteil der optischen Steckverbindung in ein Steckeraufnahmeteil bzw. eine Steckerbuchse der optischen Steckverbindung einsteckbar ist. Herkömmliche normierte Systeme von optischen Steckverbindungen umfassen an optischen Kabeln (bzw. an optischen Adern von mehradrigen Kabeln) montierte Kabelstecker, die üblicherweise Einsteckteile der Steckverbindung bilden, und in Gerätegehäusen von Geräten mit optischen Ein- und/oder Ausgängen montierbare Chassisstecker, die meist als Steckeraufnahmeteile ausgebildet sind.

Für Chassisstecker existieren genormte Flanschverbindungen für ihre Montage in Gehäusen. Beispielsweise sind für Chassisstecker für Audioanwendungen D-Flansche weit verbreitet. Ein Chassisstecker kann als Kupplung ausgebildet sein, die sowohl an ihrer Vorder- als auch an ihrer Rückseite Einstecköffnungen zur Aufnahme eines Kabelsteckers aufweist, wobei die optische Verbindung zwischen den beiden Kabeln (bzw. Adern von Kabeln), an denen die Kabelstecker angebracht sind, hergestellt wird. An der geräteinnenseitigen Rückseite des Chassissteckers kann stattdessen ein optischer Lichtleiter fix montiert sein.

Herkömmliche normierte Systeme umfassen weiters freie Kupplungen, die zur Verbindung von Kabeln mit daran angebrachten als Einsteckteile ausgebildete Kabelsteckern dienen.

Es sind verschiedene Normen für optische Steckverbindungen bekannt, beispielsweise LC-Steckverbindungen, SC-Steckverbindungen und MU-Steckverbindungen. Der Trend geht hierbei zu Steckverbindungen mit kleinen Baugrößen, zu denen insbesondere die LC-Steckverbindungen zählen.

Die genannten optischen Steckverbindungen beruhen auf dem "physical-contact"-Prinzip (auch als Stirnflächenkupplung bezeichnet), bei welchem die Enden der optischen Lichtleiter in genauer Zentrierung aneinander angelegt werden. Die Enden der optischen Fasern sind hierbei in einem zentralen Kanal eines Stifts angeordnet, der als Ferrule bezeichnet wird. Dieser Stift besteht sehr häufig aus Keramik, aber auch andere Materialien für diesen Stift sind denkbar und möglich, z.B. Metall oder eine Kombination aus Metall und Keramik. In diesem Kanal wird der optische Lichtleiter bis zum vorderen Ende des Stifts geführt, Am vorderen Ende des Keramikstifts ist der Lichtleiter geschliffen, z.B. plangeschliffen, auch Konvex- und Schrägschliffe sind üblich. Bei Single-Mode-Lichtleitern liegt der Durchmesser des Lochs normalerweise im Bereich zwischen 6 und 9 µm, bei Multi-Mode-Lichtleitern im Bereich von 60 µm. Zur Herstellung einer optischen Steckverbindung werden die endseitigen Ferrulen der beiden Lichtleiter in zentrierter Weise gegeneinandergedrückt. Zur Zentrierung der Ferrulen werden diese in Zentrierhülsen eingesteckt, die in Längsrichtung geschlitzt ausgebildet sein können ("Slit-Sleeve").

Bekannt geworden ist es auch, Lichtleiter über Linsenanordnungen optisch miteinander zu verbinden. Hierbei weitet eine Linse am Ende des ersten Lichtleiters den Strahl auf und mittels einer zweiten Linse am Eingang des zweiten Lichtleiters wird das Licht in den zweiten Lichtleiter hineinfokussiert. Derartige, weniger häufig eingesetzte optische Verbindungen, die mit vergleichsweise größeren Verlusten behaftet sind, werden auch als Linsenkoppler oder Steckverbindungen mit Strahlaufweitung bezeichnet.

Ein Problem bei optischen Steckerbindungen nach dem "physical-contact"-Prinzip stellen Verschmutzungen, insbesondere durch Staub, des Endes des optischen Lichtleiters am vorderen Ende der Ferrule dar. Es wurden daher bereits sowohl für Steckerteile als auch für Steckeraufnahmeteile von optischen Steckverbindungen aufschraubbare oder aufsteckbare Deckel zum Schutz des Endes des optischen Lichtleiters vorgeschlagen. Solche Deckel können allerdings leicht verloren gehen oder werden häufig aus Unachtsamkeit nicht aufgesetzt.

Auch können an nicht zusammengesteckten Steckverbindern austretende Lichtstrahlen, die zu Netzhautbeschädigungen führen können, Benutzer gefährden.

Ein weiteres Problem stellt die Empfindlichkeit solcher Steckverbinder gegen mechanische Beschädigungen dar. Beispielsweise sind diese Teile nicht trittsicher ausgebildet und können daher nicht auf einen begangenen Boden, beispielsweise eine Bühne gelegt werden. Im militärischen Bereich wurden bereits gegen mechanische Beschädigungen durch Gehäuse geschützte Steckverbinder eingesetzt, welche allerdings teuer sind. Auch entsprechen diese Steckverbinder nicht den herkömmlichen Normen.

Es wurden bereits Kabelstecker bereitgestellt, welche eine an der Außenseite des Gehäuses verschwenkbar gelagerte Klappe aufweisen, die beim Einstecken in ein Steckeraufnahmeteil selbsttätig geöffnet wird, indem eine Betätigungsnocke des Steckeraufnahmeteils in einen Betätigungsschlitz der Klappe eingreift. Ein solcher Kabelstecker geht beispielsweise aus der US 2 001/0043777 A1 hervor. Ein solcher Kabelstecker ist empfindlich gegenüber mechanischen Einwirkungen. Außerdem ist ein solcher Kabelstecker nicht im Zusammenhang mit den üblichen Standard-Steckeraufnahmeteilen einsetzbar, insbesondere nicht im Zusammenhang mit LC-Steckeraufnahmeteilen.

Ein Steckeraufnahmeteil bzw. Buchsenteil einer optischen Steckverbindung, welche als Staubschutz verschwenkbare Flügel aufweist, welche beim Einstecken eines Steckerteils verschwenkt werden, ist aus der EP 0 977 062 A2 bekannt. Die aus dieser Schrift bekannte Ausbildung eignet sich wiederum nicht für Steckerbuchsen, die nach den gängigen Normen ausgebildet sind, insbesondere den eine kleine Baugröße aufweisenden Normen, wie den LC-Steckern. Auch kann ein effektiver Staubschutz nicht sichergestellt werden, da ein relativ großer Luftraum zwischen den Flügeln und der vor Staub zu schützenden Ferrule vorhanden ist, in welchen leicht Verschmutzungen gelangen können.

Aus der US 6, 340,246 B1 ist eine Steckerbuchse bekannt, in die ein Kabelstecker nach dem SC-Standard einsteckbar.ist. In ein Gehäuse der Steckerbuchse ist ein Einsatzteil eingesetzt, welches eine Ferrulen-Einstecköffnung aufweist, in die die Ferrule des Kabelsteckers einsteckbar ist. Weiters ist zwischen dem Gehäuse und dem Einsatzteil ein in achsialer Richtung verschiebbar geführtes Verschiebteil angeordnet. An diesem ist eine Verschlussklappe verschwenkbar gelagert, die in der vorderen Endstellung des Verschiebeteils die Ferrulen-Einstecköffnung verschließt. Beim Einstecken des Kabelsteckers wird das Verschiebeteil nach hinten verschoben, wobei die Verschlussklappe vom vorderen Ende des Einsatzteils verschwenkt wird und die Ferrulen-Einstecköffnung zum Einstecken der Ferrule freigibt. Durch die exzentrische vom Kabelstecker aufzubringende Verschiebekraft kann es hier zu einem Verkanten des Kabelsteckers beim Einstecken kommen. Für eine eine kleinere Baugröße aufweisende Norm einer optischen Steckerbindung, beispielsweise eine LC-Steckverbindung erscheint der aus der US 6,340,246 B1 bekannte Mechanismus weniger geeignet. Ein mechanischer Schutz für den Kabelstecker ist nicht vorgesehen. Auch ist der Lichtleiter des Kabelsteckers nicht gegen verschmutzungen geschützt.

Aus der Patentanmeldung EP-A2-1020743 ist eine Kabelstecker-Schutzeinheit für optische Verbindungselemente bekannt, wobei die Verbindungselemente über eine separate Fixiereinheit montiert sind.

Eine Aufgabe der Erfindung ist es, eine Kabelstecker-Schutzeinheit bereitzustellen, durch die ein mechanischer Schutz für einen normierten Kabelstecker einer herkömmlichen optischen Steckverbindung, insbesondere LC-Steckverbindung, erreicht wird Erfindungsgemäß-gelingt dies durch eine Kabelstecker-Schutzeinheit mit den Merkmalen des Anspruchs 1. Durch die Kabelstecker-Schutzeinheit wird ein Schutz des Kabelsteckers gegen Beschädigungen erreicht. In einer vorteilhaften Ausführungsform ist hierbei vorgesehen, dass im Gehäuse der Kabelstecker-Schutzeinheit ein in achsialer Richtung verschiebbar geführtes Verschiebeteil angeordnet ist und die Kabelstecker-Schutzeinheit weiters eine um eine Schwenkachse verschwenkbare Verschlusskappe umfasst, die durch eine Verschiebung des Verschiebteils beim Einstecken der Kabelstecker-Schutzeinheit in ein zugeordnetes Steckeraufnahmeteil zwischen einer die Ferrule des in der Kabelstecker-Schutzeinheit montierten Kabelsteckers verschließenden aktiven Stellung und einer die Ferrule freigebenden passiven Stellung verschwenkbar ist.

Für elektrische Datenkabel, insbesondere RJ-45-Kabel, wie sie zur Datenübertragung in Netzwerken eingesetzt werden, ist aus der EP 1 317 025 A2 eine Steckeranordnung bekannt, durch die ein am RJ-45-Kabel montierter RJ-45-Stecker gegen mechanische Einwirkungen geschützt wird. Zur Herstellung einer elektrischen Steckverbindung ist weiters eine Steckerbuchse bzw. ein Steckeraufnahmeteil vorgesehen, in welches die Steckeranordnung einsteckbar ist, wobei eine Rasteinrichtung zur Verrastung der beiden Teile vorhanden ist. Eine optische Steckverbindung geht aus dieser Schrift nicht hervor.

Weitere Vorteile und Einzelheiten der Erfindung werden im Folgenden anhand des in der beiliegenden Zeichnung dargestellten Ausführungsbeispiels der Erfindung erläutert. In der Zeichnung zeigen:

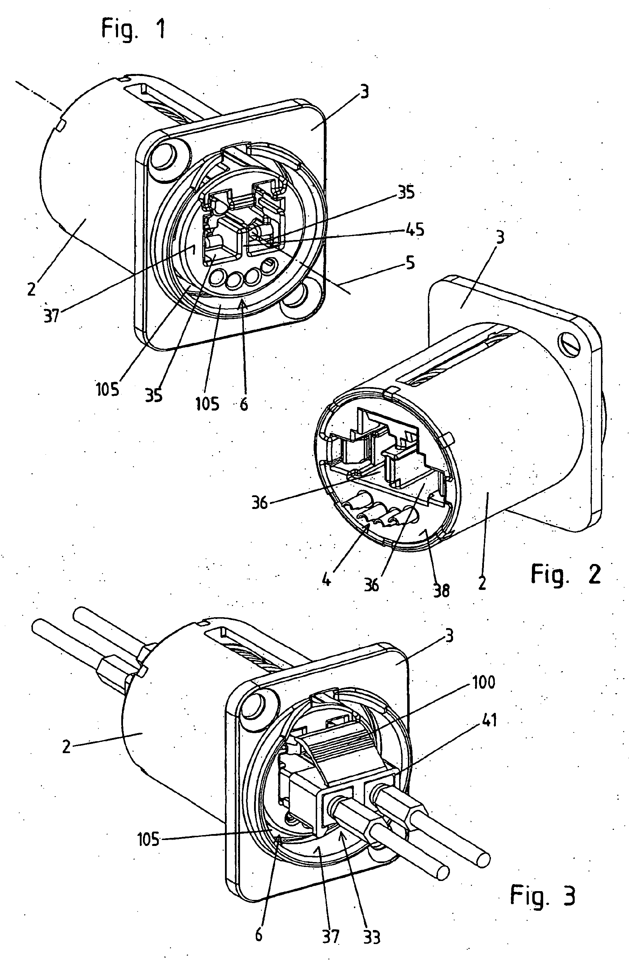

- Fig. 1: und Fig. 2 perspektivische Darstellungen aus verschiedenen Blickwinkeln eines beispielhaften Steckeraufnahmeteils;
- Fig. 3: das Steckeraufnahmeteil mit herkömmlichen, normierten darin eingesteckten Kabelsteckern;
- Fig. 4: eine perspektivische Darstellung der nach Art einer Explosionsdarstellung auseinandergezogenen Teile des Steckeraufnahmeteils;

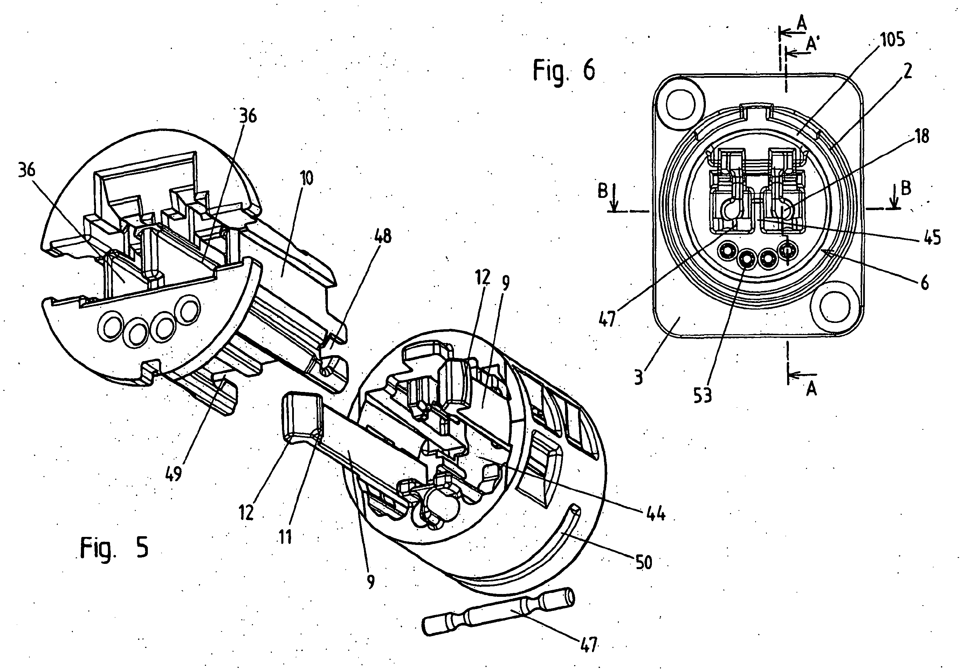

- Fig. 5: das Einsatzteil, Verschiebeteil und Blockierglied aus einem gegenüber Fig. 4 anderen Blickwinkel;
- Fig. 6: eine Vorderansicht des Steckeraufnahmeteils;
- Fig. 7: einen Schnitt entlang der Linie A-A von Fig. 6 (der im Wesentlichen durch eine optische Achse geführt ist und im Bereich des elektrischen Kontaktelements der Übersichtlichkeit halber etwas versetzt ist);
- Fig. 8: einen Schnitt entlang der Linie A-A von Fig. 6, aber mit vorder- und rückseitig eingesteckten Kabelsteckern (wobei die Kabelstecker nur in ihrer äußeren Kontur dargestellt sind);
- Fig. 9: einen Schnitt entlang der Linie A-A' von Fig. 6 (zur Verdeutlichung der Zwangsführung der Verschlussklappe), im Zustand, in welchem sich das Steckeraufnahmeteil bei einem in die Einstecköffnung an der Vorderseite eingesteckten Kabelstecker befindet, aber ohne den Kabelstecker;
- Fig. 10: und Fig. 11 das Einsatzteil und das Verschiebeteil im Schnitt entlang der Linie A-A von Fig. 6;
- Fig. 12: einen Schnitt entlang der Linie B-B von Fig. 6;
- Fig. 13 und Fig. 14: perspektivische Darstellungen der Verschlussklappe und der Betätigungselemente (die einteilig mit dem Verschiebeteil ausgebildet sind), aus verschiedenen Blickrichtungen, in Fig. 13 im gegenseitigen Eingriff und in Fig. 14 auseinandergezogen;
- Fig. 15: eine perspektivische Darstellung eines herkömmlichen normierten Kabelsteckers in Form eines LC-Kabelsteckers;
- Fig. 16: eine perspektivische Darstellung der erfindungsgemäßen auf einem Kabelstecker montierten Kabelstecker-Schutzeinheit;
- Fig. 17: eine Vorderansicht der Kabelstecker-Schutzeinheit;
- Fig. 18: einen Schnitt entlang der Linie A-A' von Fig. 17 (der im Wesentlichen durch eine optische Achse geführt ist und im Bereich des elektrischen Kontaktelements etwas nach außen versetzt ist);
- Fig. 19: einen Schnitt entlang der Linie A-A von Fig. 17 (durch eine optische Achse), wobei die Einheit im in ein Steckeraufnahmeteil eingesteckten Zustand dargestellt ist, aber ohne das Steckeraufnahmeteil;
- Fig. 20: eine perspektivische Darstellung der entlang der Linie A-A von Fig. 17 aufgeschnittenen Einheit, im Zustand entsprechend Fig. 19;
- Fig. 21: eine perspektivische Darstellung der nach Art einer Explosionsdarstellung auseinandergezogenen Teile der Kabelstecker-Schutzeinheit;
- Fig. 22: eine perspektivische Darstellung des Verschiebeteils, der Verschlussklappe und der die Verschlussklappe beaufschlagenden Feder in einer perspektivischen Explosionsdarstellung von schräg hinten;
- Fig. 23: die Fixiereinheit und das Verschiebeteil mit der daran verschwenkbar gelagerten Verschlussklappe im auseinandergezogenen Zustand der beiden Baueinheiten in einer perspektivischen Ansicht von schräg hinten;
- die Fig. 24 bis 27: perspektivische Darstellungen zur Erläuterung der Montage und der Kabelzugentlastungseinrichtung;
- Fig. 28: das Steckeraufnahmeteil und die auf zwei Kabelsteckern montierte Kabelstecker-Schutzeinheit im zusammengesteckten Zustand, im Schnitt (Schnittlinie A-A von Fig. 6 bzw. A-A' von Fig. 17), wobei in das Steckeraufnahmeteil rückseitig Kabelstecker eingesteckt sind.

Das in den Fig. dargestellte Steckeraufnahmeteil 1, welches im gezeigten Beispiel als Chassisstecker ausgebildet ist, besitzt ein Gehäuse 2, das in einem herkömmlichen D-Flansch-Ausschnitt montierbar ist. Es besitzt hierzu einen geeigneten Außendurchmesser und einen Schraubenlöcher aufweisenden Montageflansch 3.

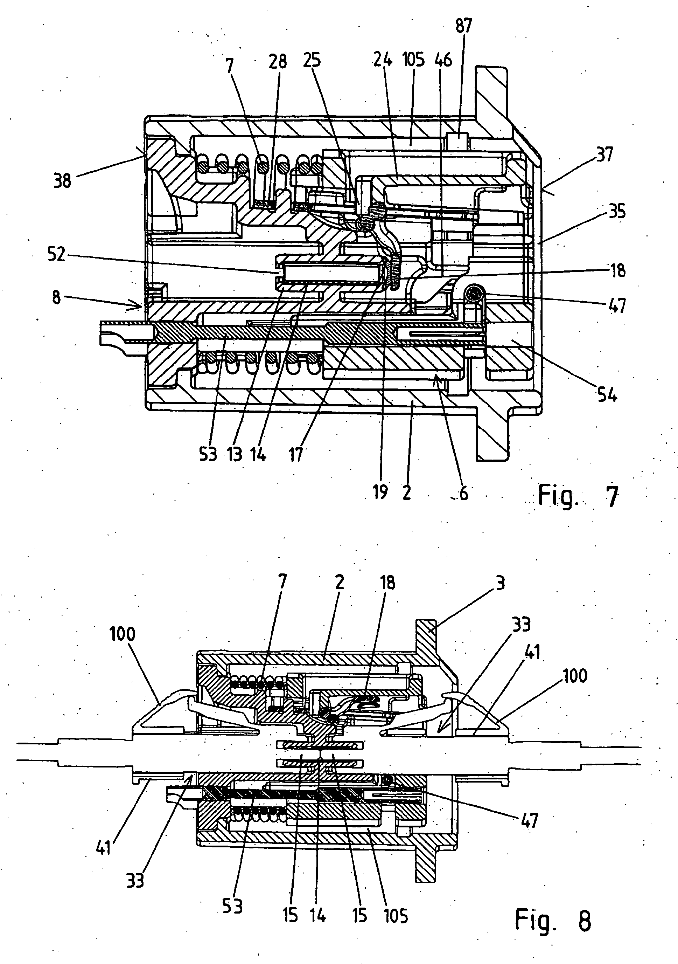

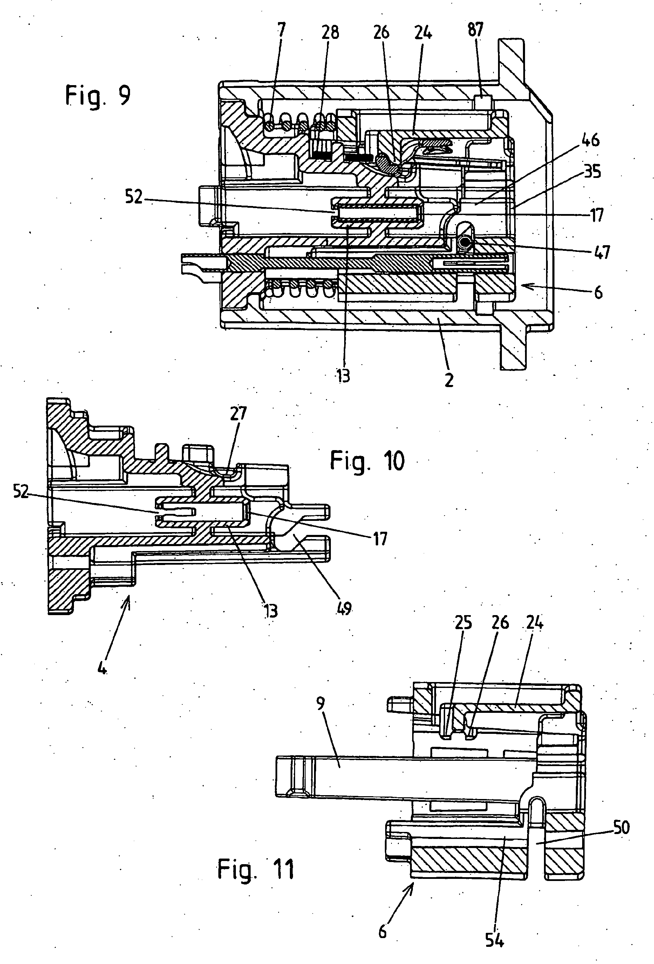

Im Gehäuse 2 ist ein gegenüber dem Gehäuse 2 unverschiebbares Einsatzteil 4 und ein gegenüber dem Gehäuse 2 und dem Einsatzteil 4 in Richtung der Längsachse 5 des Gehäuses 2 zwischen einer vorderen Verschiebeposition (Fig. 7) und einer hinteren Verschiebeposition (Fig. 8 und 9) verschiebbares Verschiebeteil 6 eingesetzt. Das Verschiebeteil 6 ist durch eine in Form einer Schraubenfeder ausgebildete Feder 7, die sich einerseits am Federanschlag 8 des Einsatzteils 4 andererseits am Verschiebeteil 6 abstützt, in seine vordere Verschiebeposition entsprechend Fig. 7 beaufschlagt.

Das Verschiebeteil 6 besitzt zwei nach hinten sich erstreckende Arme 9, die zur achsialen Führung des Verschiebeteils 6 in Längsnuten 10 des Einsatzteils 4 liegen und im Bereich ihrer freien Enden nach innen ragende Nasen aufweisen, die mit einer nach hinten gerichteten Fläche des Einsatzteils 4 am rückseitigen Ende der Längsnuten 10 zusammenwirken und Anschläge 11 zur Begrenzung der Verschiebung des Verschiebeteils 6 nach vorne bilden. Die Arme 9 besitzen weiters im Bereich ihrer freien Enden nach außen abstehende Nasen, die Montageanschläge 12 für das rückseitige Ende der Feder 7 beim Montagevorgang des Steckeraufnahmeteils 1 bilden. Die Feder 7 kann dadurch auf dem Verschiebeteil 6 montiert werden, bevor das Verschiebeteil 6 auf dem Einsatzteil 4 aufgesteckt worden ist. Die Arme 9 weisen eine ausreichende Elastizität auf, um bei der Montage des Steckeraufnahmeteils die Anschläge 11 über das Einsatzteil 4 führen zu können und die Feder 7 über die Montageanschläge 12 führen zu können.

Das Einsatzteil 4 weist zwei Lagerhülsen 13 auf, in die Zentrierhülsen 14 eingesetzt sind. Die Zentrierhülsen 14 dienen in herkömmlicher Weise zur Zentrierung der Ferrulen 15, welche die Enden der zu verbindenden Lichtleiter aufnehmen. Die Zentrierhülsen können in herkömmlicher Weise längsgeschlitzt ausgebildet sein (= "Slit-Sleeve").

Am Einsatzteil 4 ist eine Verschlussklappe 16 verschwenkbar gelagert, wobei sie zwischen einer aktiven Stellung, in der sie eine vordere Ferrulen-Einstecköffnung 17 der Zentrierhülse 14 verschließt und einer diese Ferrulen-Einstecköffnung 17 freigebenden passiven Stellung verschwenkbar ist. Die Verschlussklappe 16 weist zum Verschluss einer jeweiligen Ferrulen-Einstecköffnung ein Verschlussteil 18 auf, an dem eine Dichtung 19 aus einem elastischen Material angeordnet ist, welches die Ferrulen-Einstecköffnung 17 in der aktiven Stellung der Verschlussklappe 16 staubdicht abdichtet.

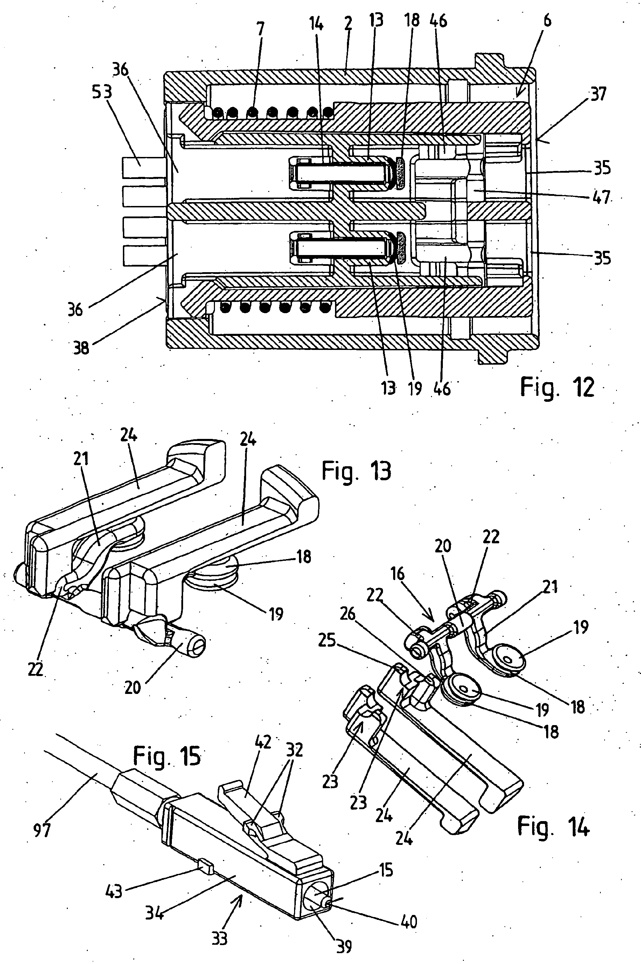

Im gezeigten Beispiel besitzt die Verschlussklappe 16 zwei zweiarmige Hebel, die an einem gemeinsamen, die Schwenkachse bildenden Achsbolzen 20 angeordnet sind. Der jeweilige erste Hebelarm 21 des Hebels trägt das jeweilige Verschlussteil 18 und der jeweilige zweite Hebelarm 22 wirkt mit einem jeweiligen die Verschlussklappe 16 bei der Verschiebung des Verschiebeteils 6 betätigenden Betätigungselement 23 des Verschiebeteils 6 zusammen (vgl. z. B. Fig. 13 und 14). Das jeweilige Betätigungselement 23 ist hierbei gabelartig ausgebildet und an einem vom Verschiebeteil 6 sich nach hinten erstreckenden Armfortsatz 24 des Verschiebeteils 6 angebracht. Der zweite Hebelarm 22 ist zwischen den beiden Gabelfortsätzen 25, 26 eines jeweiligen Betätigungselements in beide Verschieberichtungen des Verschiebeteils 6 zwangsgeführt, wodurch die Verschlussklappe 16 zwischen ihrem aktiven und ihrem passiven Zustand verschwenkt wird.

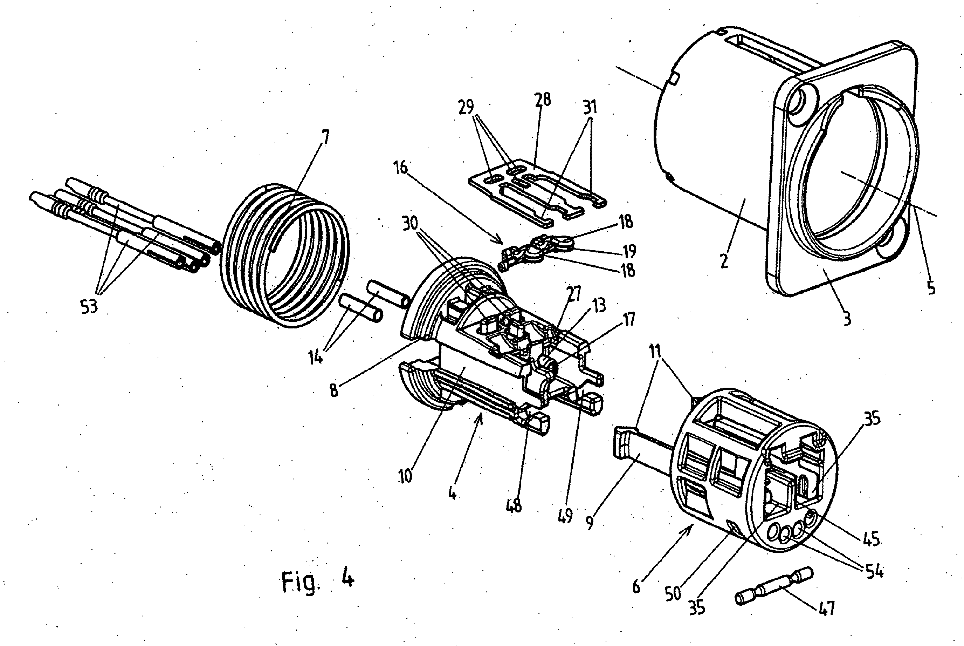

Der Achsbolzen 20 der Verschlussklappe 16 ist in Aufnahmenuten 27 des Einsatzteils 4 (Fig. 4) angeordnet und wird mittels eines die Aufnahmenuten 27 überdeckenden Halteblechs 28 in diesen gehalten. Das Halteblech 28 besitzt Ausnehmungen 29, die auf Zapfen 30 des Einsatzteils 4 aufgesteckt sind.

Im Halteblech 28 sind weiters nutartige Rastelemente 31 angeordnet, in welche nasenartige Rastelemente 32 eines Kabelsteckers 33 (Fig. 15) einrastbar sind, wie weiter unten beschrieben.

Grundsätzlich wäre es auch denkbar und möglich, jeder Ferrulen-Einstecköffnung 17 eine eigene verschwenkbar gelagerte Verschlussklappe mit einem Verschlussteil 18 zum Verschluss der Ferrulen-Einstecköffnung 17 zuzuordnen. Im Falle einer gemeinsamen Verschlussklappe 16 könnte auch nur ein einzelnes mit dieser zusammenwirkendes Betätigungselement 23 vorgesehen sein. Dieses könnte hierbei auch mit einem im Bereich zwischen den beiden Hebeln, an denen die Verschlussteile 18 angeordnet sind, am Achsbolzen 20 angeordneten Hebelfortsatz zusammenwirken.

Prinzipiell denkbar und möglich wäre es in einem anderen Beispiel auch, die Verschlussklappe 16 am Verschiebeteil 6 schwenkbar zu lagern. Das in diesem Fall am Einsatzteil 4 anzuordnende mindestens eine Betätigungselement würde dann auf der gleichen Seite des Achsbolzens 20, auf der das mindestens eine Verschlussteil 18 angeordnet ist, mit der Verschlussklappe zusammenwirken.

Weiters wäre es denkbar und möglich, anstelle einer Zwangsführung der Verschlussklappe 16 in beide Verschwenkrichtungen diese nur in eine Verschwenkrichtung zu betätigen und für die andere Verschwenkrichtung eine Rückstellfeder vorzusehen.

Beim gezeigten Beispiel besitzt das Steckeraufnahmeteil an seinen beiden Stirnseiten jeweils zwei Kabelstecker-Einstecköffnungen 35, 36. Prinzipiell könnte ein Steckeraufnahmeteil auch mit mehr oder weniger solchen Kabelstecker-Einstecköffnungen 35, 36 ausgebildet sein. Zumindest an einer der Stirnseiten des Steckeraufnahmeteils, welche im Rahmen dieser Schrift als Vorderseite 37 bezeichnet wird, ist eine Kabelstecker-Einstecköffnung 35 vorhanden. Wenn in der gegenüberliegenden Rückseite 38 ebenfalls mindestens eine Kabelstecker-Einstecköffnung 36 vorhanden ist, so kann über das Steckeraufnahmeteil eine optische Verbindung zwischen den Lichtleitern von optischen Kabeln hergestellt werden, die an den in die Kabelstecker-Einstecköffnungen 35, 36 eingesteckten Kabelstecker 33 angeschlossen sind. Wenn an der Rückseite 38 keine Kabelstecker-Einstecköffnung 36 angeordnet ist, so kann mindestens ein Lichtleiter bereits fix am Steckeraufnahmeteil 1 montiert sein, wobei die endseitige Ferrule dieses Lichtleiters von der Rückseite des Steckeraufnahmeteils her in die Zentrierhülse 14 ragt. Auch kann direkt mindestens ein optoelektronisches Bauelement (tranceiver) an der Rückseite angebaut sein, welches direkt oder unter Zwischenschaltung eines Lichtleiters mit dem mindestens einen von der Vorderseite her eingesteckten Kabelstecker zusammenwirken kann. Die Ferrule des mindestens einen von der Vorderseite eingesteckten Kabelsteckers wird hierbei wiederum in eine jeweilige Zentrierhülse eingesteckt.

In die Kabelstecker-Einstecköffnungen 35, 36 sind normierte Kabelstecker 33 einsteckbar, die im gezeigten Ausführungsbeispiel als LC-Stecker ausgebildet sind. In Fig. 15 ist ein solcher herkömmlicher Kabelstecker 33 in Form eines LC-Steckers dargestellt, der ein Steckerteil einer optischen. Steckverbindung bildet. Der Kabelstecker 33 besitzt ein Gehäuse 34 mit einer am vorderen (=steckerseitigen) Ende angeordneten Öffnung 39, aus der eine Ferrule 15 herausragt. Die Ferrule 15 besitzt in herkömmlicher Weise einen durchgehenden Längskanal, in den der Endabschnitt des Lichtleiters ragt, dessen stirnseitiges, poliertes Ende 40 bündig mit dem freien Ende der Ferrule 15 abschließt. Der Lichtleiter ist dem Kabelstecker 33 durch eine optische Ader 97 zugeführt, wobei mehrere solche Kabeladern zu einem Kabel zusammengefasst sein können. Hierbei kann das Kabel je nach Anwendungsfall neben optischen Adern auch elektrische Adern aufweisen, wodurch ein "Hybridkabel" gebildet wird.

Die Ferrule 15 ist in herkömmlicher Weise in achsialer Richtung federnd gelagert. Am Gehäuse 34 ist ein elastischer Rastarm 42 angeordnet, der beidseitig abstehende nasenartige Rastelemente 32 aufweist. Das Gehäuse 34 weist weiters in einem Bereich hinter seiner Längsmitte beidseitig abstehende Nasen 43 auf. Ein in Einsteckrichtung vor diesen Nasen 43 sich befindender vorderer Abschnitt des Gehäuses 34 ist in die Kabelstecker-Einstecköffnung 35, 36 zur Herstellung der optischen Verbindung einsteckbar.

Die an der Vorderseite 37 des Steckeraufnahmeteils 1 sich befindenden Kabelstecker-Einstecköffnungen 35 sind im Verschiebeteil 6 angeordnet. Die Kabelstecker-Einstecköffnungen 35 werden hierbei von der vorderen Mündung eines das Verschiebeteil 6 durchsetzenden Kanals 44 gebildet. Im gezeigten Ausführungsbeispiel sind die Kabelstecker-Einstecköffnungen 35 nicht vollständig, sondern nur teilweise durch einen Mittelsteg 45 voneinander abgegrenzt. Prinzipiell wäre es auch denkbar und möglich, die Kabelstecker-Einstecköffnungen 35 vollständig voneinander abzugrenzen und zwei getrennte das Verschiebeteil 6 durchsetzende Kanäle 44 auszubilden. Im gezeigten Ausführungsbeispiel sind die beiden Kanäle bis zu ihren vorderen Mündungen zu einem gemeinsamen Kanal 44 verbunden.

Im zusammengebauten Zustand des Einsatzteils 4 und des Verschiebeteils 6 bilden diese Teile gemeinsam einen an die jeweilige Kabelstecker-Einstecköffnung 35 anschließenden Kabelstecker-Einsteckkanal 46, dessen Seitenwände teilweise vom Verschiebeteil 6, teilweise vom Einsatzteil 4 gebildet werden. In diesen Kabelstecker-Einsteckkanal 46 ist der vordere Abschnitt des Gehäuses 34 des Kabelsteckers 33 einsteckbar, wobei die Ferrule 15 des Kabelsteckers 33 durch diesen Kabelstecker-Einsteckkanal 46 durch die Ferrulen-Einstecköffnung 17 der Lagerhülse 13 in diese und in die von ihr gelagerte Zentrierhülse 14 einsteckbar ist.

Beim Einstecken des Kabelsteckers 33 in das Steckeraufnahmeteil 1 wird das Verschiebeteil 6 von seiner vorderen in seine hintere Verschiebeposition verschoben, wobei die Verschlussklappe 16 von ihrer aktiven in ihre passive Lage verschwenkt wird. Prinzipiell wäre es denkbar und möglich, dass die Verschiebung des Verschiebeteils 6 nur dadurch erfolgt, dass der Kabelstecker 33 beim Einstecken in den Kabelstecker-Einsteckkanal 46 eine Reibungskraft überwinden muss, die größer ist als die von der Feder 7 aufgebrachte Kraft. Bevorzugt ist es aber, dass in der vorderen Verschiebeposition des Verschiebeteils 6 ein Blockierglied 47 in den Kabelstecker-Einsteckkanal ragt. Der Kabelstecker 33 ist in der vorderen Verschiebeposition des Verschiebeteils 6 nur bis zum Anschlag an dieses Blockierglied 47 in den Kabelstecker-Einsteckkanal 46 einsteckbar. Bei einer weiteren Verschiebung des Kabelsteckers 33 in die Einsteckrichtung wird zunächst das Verschiebeteil 6 in seine hintere Verschiebeposition verschoben, in der das Blockierglied den Kabelstecker-Einsteckkanal freigibt, wobei der Kabelstecker 33 vollständig eingesteckt werden kann. Es wird dadurch eine Kollision des Kabelsteckers 33 mit der Verschlussklappe 16 zuverlässig verhindert.

Das Blockierglied 47 wird im gezeigten Beispiel von einem Bolzen gebildet, der in einer Kulissenführung des Einsatzteils 4 geführt ist. Hierzu ragen seine beiden Enden in Kulissenbahnen 48, 49. Der Bolzen wird weiters bei der Verschiebung des Verschiebeteils 6 von diesem mitgenommen, sodass er entlang der Kulissenbahn 48, 49 verschoben wird, wobei er quer zur Verschieberichtung zwischen einer in den Kabelstecker-Einsteckkanal ragenden und einer diesen freigebenden Stellung verschoben wird. Zur Mitnahme des Bolzens durch das Verschiebeteil 6 ist im Verschiebeteil 6 ein das Blockierglied 47 aufnehmender Schlitz 50 angeordnet, der sich quer zur Verschieberichtung des Verschiebeteils 6 erstreckt, vorzugsweise senkrecht zu dieser Verschieberichtung.

Beim gezeigten Beispiel sind an der Rückseite des Steckeraufnahmeteils ebenfalls zwei Kabelstecker-Einstecköffnungen 36 vorhanden, die im Einsatzteil 4 angeordnet sind. Durch diese Kabelstecker-Einstecköffnungen 36 können von der Rückseite des Steckeraufnahmeteils 1 her ebenfalls die gleichen normierten Kabelstecker 33 wie auf der Vorderseite des Steckeraufnahmeteils 1 eingesteckt werden. Die Kabelstecker 33 werden hierbei durch die Kabelstecker-Einsteckkanäle 51 des Einsatzteils 4 eingesteckt, wobei ihre Ferrulen in die Ferrulen-Einstecköffnungen 52 am hinteren Ende der Lagerhülse 13 in die Zentrierhülse 14 eingesteckt werden.

Das Steckeraufnahmeteil 1 ist im gezeigten Beispiel somit als Zweifachkupplung für zwei optische Verbindungen von je zwei Kabeln ausgebildet. Eine Ausbildung als Einfachkupplung wäre ebenso denkbar und möglich, wobei an der Vorder- und Rückseite 37, 38 jeweils nur eine Kabelstecker-Einstecköffnung 35, 36 vorhanden wäre (ebenso nur eine Lagerhülse 13, Zentrierhülse 14 usw.).

Wenn an der Vor- bzw. Rückseite 37, 38 des Steckeraufnahmeteils zwei Kabelstecker 33 einzustecken sind, so können diese durch eine Klammer 41 miteinander verbunden sein. An dieser Klammer kann ein elastischer Betätigungsarm 100 angeordnet sein, mit dem die Rastarme 42 der beiden Kabelstecker 33 gleichzeitig betätigt werden können.

Beim gezeigten Beispiel ist das Steckeraufnahmeteil 1 weiters als "Hybridstecker" ausgebildet, das heißt neben einer optischen Verbindung ist auch eine elektrische Verbindung herstellbar. Zu diesem Zweck weist das Steckeraufnahmeteil elektrische Kontaktelemente 53 auf. Diese sind im Einsatzteil 4 festgelegt und ragen mit vorderen Abschnitten in Kanäle 54 im Verschiebeteil 6, wobei sie in der hinteren Verschiebeposition des Verschiebeteils 6 bis nahe zu den vorderen Enden der Kanäle 54 reichen. Diese vorderen Abschnitte der elektrischen Kontaktelemente 53 sind als Kontakthülsen ausgebildet, in welche Kontaktstifte einsteckbar sind. An der Rückseite des Steckeraufnahmeteils 1 ragen die elektrischen Kontaktelemente 53 aus diesem heraus, wobei sie endseitig als Löthülsen zum Anlöten eines elektrischen Leiters einer elektrischen Ader des Kabels ausgebildet sind.

Ein das Verschiebeteil 6 umgebender Ringspalt zwischen dem Gehäuse 2 und dem Verschiebeteil 6 bildet eine Einstecköffnung 105, in welche der vordere Abschnitt eines Gehäuses einer im Folgenden beschriebenen Kabelstecker-Schutzeinheit einsteckbar ist.

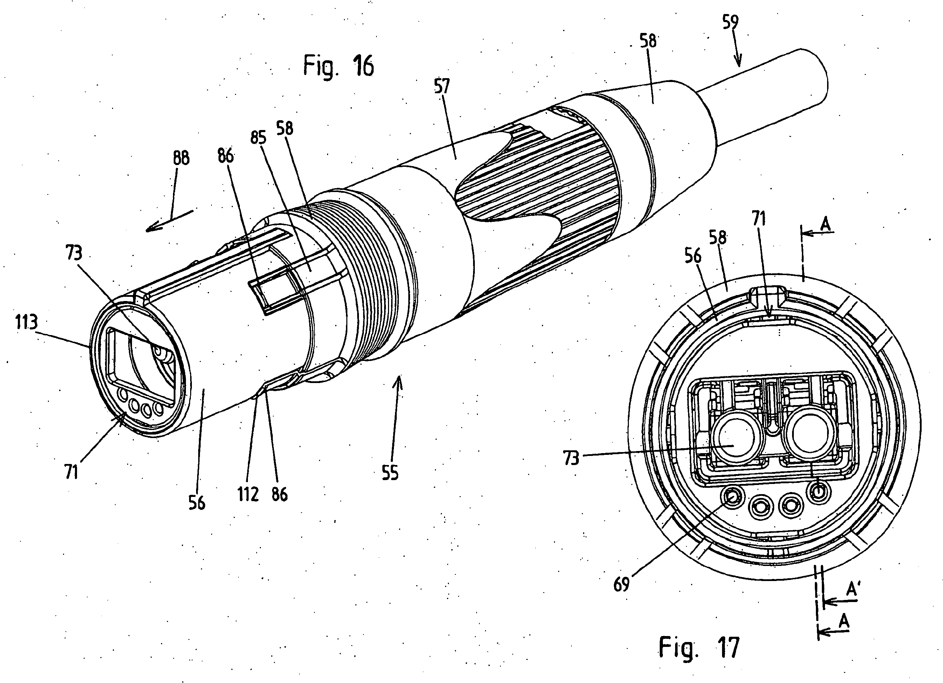

Eine erfindungsgemäße Kabelstecker-Schutzeinheit 55 zur Montage auf mindestens einem Kabelstecker 33, im gezeigten Ausführungsbeispiel zwei Kabelsteckern 33, geht aus den Fig. 16 bis 28 hervor. Die Kabelstecker-Schutzeinheit 55 besitzt ein Gehäuse, welches von einer in Bezug auf die Einsteckrichtung vorderen Gehäusehülse 56 und einer Spannhülse 57 gebildet wird, die an ihrem vorderen Ende ein innengewinde aufweist, über welches sie auf ein Außengewinde am hinteren Ende der Gehäusehülse 56 aufschraubbar ist. Am hinteren Ende der Spannhülse 57 ist eine Kabeltülle 58 aus einem elastischen Kunststoff als Knickschutz für das Kabel 59 angebracht ist.

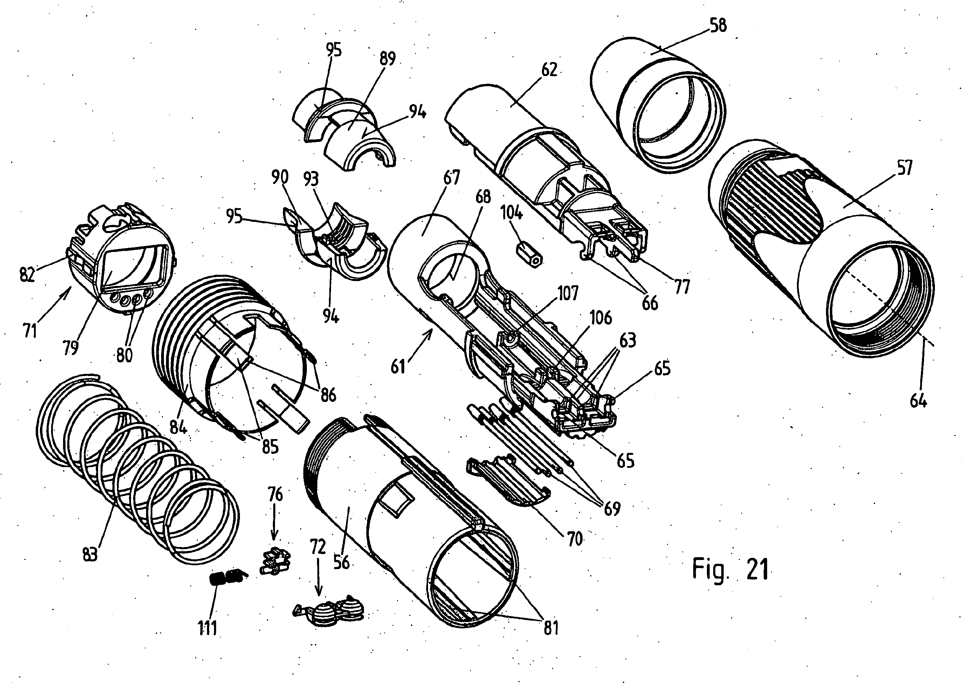

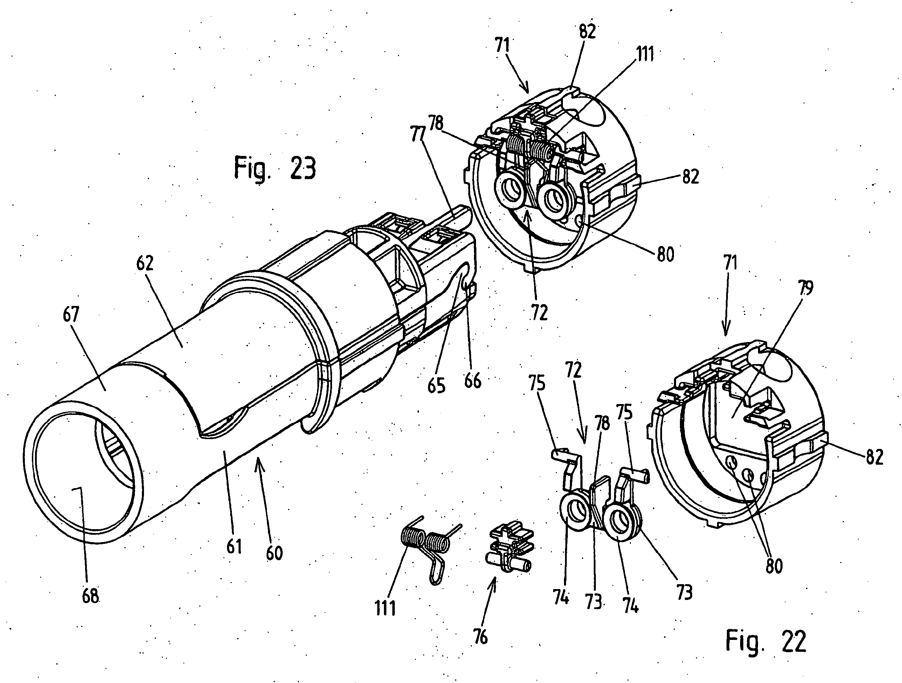

In das Gehäuse 57, 58 ist eine Fixiereinheit 60 (Fig. 23) eingesetzt, die ein Unterteil 61 und ein Oberteil 62 umfasst, zwischen welche der mindestens eine Kabelstecker 33 eingesetzt wird, im gezeigten Ausführungsbeispiel werden zwei Kabelstecker 33 eingesetzt. Im Unterteil 61 sind hierbei Nuten 63 (Fig. 21) angeordnet, welche zur Aufnahme der Nasen 43 des jeweiligen Kabelsteckers 33 dienen, wodurch die Position des Kabelsteckers 33 in Richtung der Längsachse 64 des Gehäuses 56, 57 festgelegt ist. Das Unterteil 61 und das Oberteil 62 besitzen jeweils Hakenelemente 65, 66, die vorzugsweise im Bereich der vorderen Enden des Unterteils 61 und des Oberteils 62 angeordnet sind und über die das Oberteil 62 in das Unterteil 61 einhängbar ist. Weiters ist das Oberteil vorzugsweise nach dem Zusammenführen der beiden Teile auf der den Hakenelemente 65, 66 gegenüberliegenden Seite, also im gezeigten Ausführungsbeispiel auf der Rückseite, miteinander verrastbar sind (nicht ersichtlich aus den Fig.).

Zumindest im Abschnitt, in welchem der mindestens eine Kabelstecker 33 zwischen die beiden Teile 61, 62 eingesetzt wird, sind diese halbschalenartig ausgebildet. Das Unterteil 61 weist noch einen im Bereich hinter dem Ende des Oberteils 62 liegenden hülsenartigen Abschnitt 67 auf, der eine nach innen gerichtete Fläche 68 aufweist, die sich zur Rückseite der Kabelstecker-Schutzeinheit hin konisch erweitert.

Die Begriffe "innen" und "außen" werden im Rahmen dieser Schrift unter Bezug auf die Lage relativ zur zentralen Längsachse 64 des Gehäuses 56, 57 verwendet, wobei ein weiter innen liegendes Teil näher bei der zentralen Längsachse 64 als ein weiter außen liegendes Teil liegt. Die Begriffe "vorne" und "hinten" sind auf die Einsteckrichtung bezogen, wobei ein weiter vorne liegendes Teil sich näher beim einsteckseitigen Ende 113 als ein weiter hinten liegendes Teil befindet.

In die Fixiereinheit 60 sind weiters stiftförmige elektrische Kontaktelemente 69 eingesetzt, wobei jeweils ein als Kontaktstift ausgebildeter vorderer Abschnitt des elektrischen Kontaktelements das vordere Ende der Fixiereinheit 60 nach vorne überragt. An ihren rückseitigen Enden weisen die elektrischen Kontaktelemente 69 Lötpfannen zum Anlöten eines elektrischen Leiters auf. Die elektrischen Kontaktelemente sind im Unterteil 61 angeordnet und werden von einem auf das Unterteil 61 aufgeschnappten Deckel 70 (Fig. 21) abgedeckt.

Im Gehäuse 56, 57 ist weiters ein in achsialer Richtung des Gehäuses verschiebbar geführtes Verschiebeteil 71 angeordnet, welches zwischen einer vorderen und einer hinteren Verschiebeposition verschiebbar ist. Am Verschiebeteil 71 ist eine um eine Schwenkachse verschwenkbare Abdeckklappe 72 gelagert. Diese ist durch eine Verschiebung des Verschiebeteils 71 zwischen seiner vorderen und seiner hinteren Verschiebeposition zwischen einer aktiven, die Ferrule 15 des mindestens einen Kabelsteckers 33 abdeckenden Stellung und einer passiven, die Ferrule 15 des mindestens einen Kabelsteckers 33 freigebenden Stellung verschwenkbar. Zur Abdeckung der jeweiligen Ferrule 15 dient ein jeweiliges topfartiges Abdeckteil 73, an dem eine Dichtung 74 aus einem elastomeren Material angebracht ist, welche im die Ferrule 15 abdeckenden Zustand am Gehäuse 34 des Kabelsteckers 33 im Bereich um die Öffnung 39 anliegt, wobei ein staubdicht abgeschlossener Raum gebildet wird, der das vordere Ende 40 des Lichtleiters aufnimmt.

Die verschwenkbare Lagerung der Abdeckklappe 72 am Verschiebeteil 71 geht am besten aus den Fig. 22 und 23 hervor. Die Abdeckklappe 72 besitzt zwei Achszapfen 75, die in das Verschiebeteil 71 eingeschnappt sind. Im gezeigten Ausführungsbeispiel sind die beiden Abdeckteile 73 und die Achszapfen 75 einteilig ausgebildet. Grundsätzlich wäre es auch denkbar und möglich, für jeden Kabelstecker 33 eine eigene Abdeckklappe 72 mit einem Abdeckteil 73 vorzusehen. Die Abdeckklappe 72 ist mittels einer Feder 111 in ihre aktive Stellung vorgespannt. Die Feder 111 ist mittels eines Halterungsteils 76 am Verschiebeteil 71 angebracht.

Bei der Verschiebung des Verschiebeteils 71 von seiner vorderen in seine hintere Verschiebeposition schlägt das freie Ende eines von einem nach vorne abstehenden Fortsatz der Fixiereinheit 60 gebildetes Betätigungselement 77 an einem Mittelsteg 78 der Abdeckklappe 72 an und verschwenkt diese nach oben in ihre passive Stellung.

Der jeweilige Kabelstecker 33 ist in einer Position in der Fixiereinheit 60 fixiert, in welcher sein vorderer Abschnitt, der in die Kabelstecker-Einstecköffnung 36 des Steckeraufnahmeteils 1 einsteckbar ist, über die Fixiereinheit 60 nach vorne vorsteht. Er wird hierbei von einem vorderen Gehäuseabschnitt umgeben, der von einem vorderen Teil der Gehäusehülse 56 gebildet wird.

Im in die Fixiereinheit 60 eingesetzten Zustand eines jeweiligen Kabelsteckers 33 ragt das hintere Ende seines Rastarms 42 in die Fixiereinheit 60 und wird vom Oberteil 62 der Fixiereinheit 60 gegen das Gehäuse 34 des Kabelsteckers 33 hinuntergedrückt, wodurch die von den Nasen 43 gebildeten Rastelemente des Rastarms 42 außer Funktion gesetzt sind.

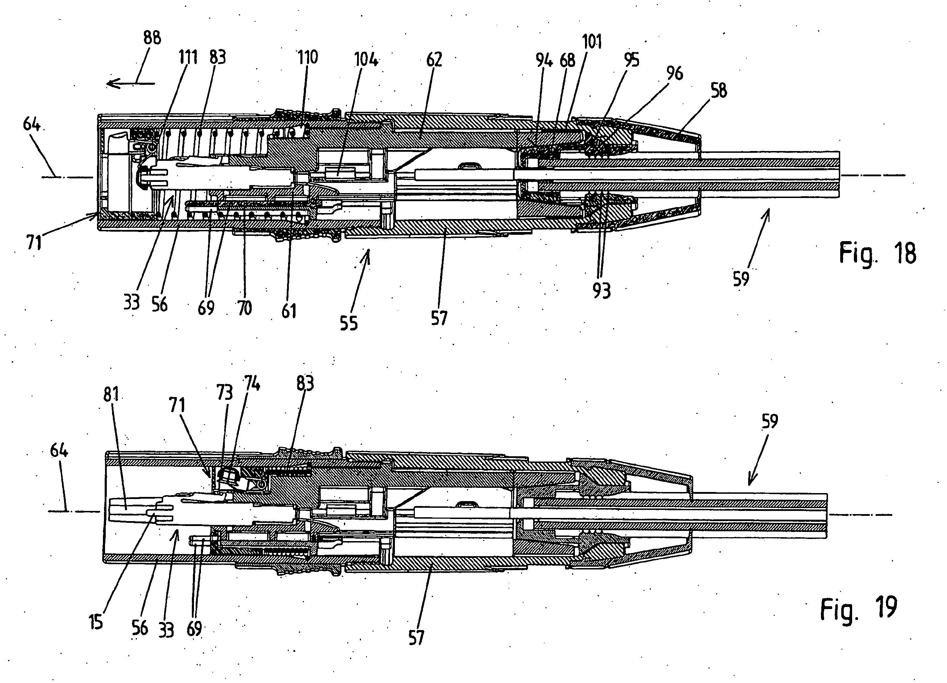

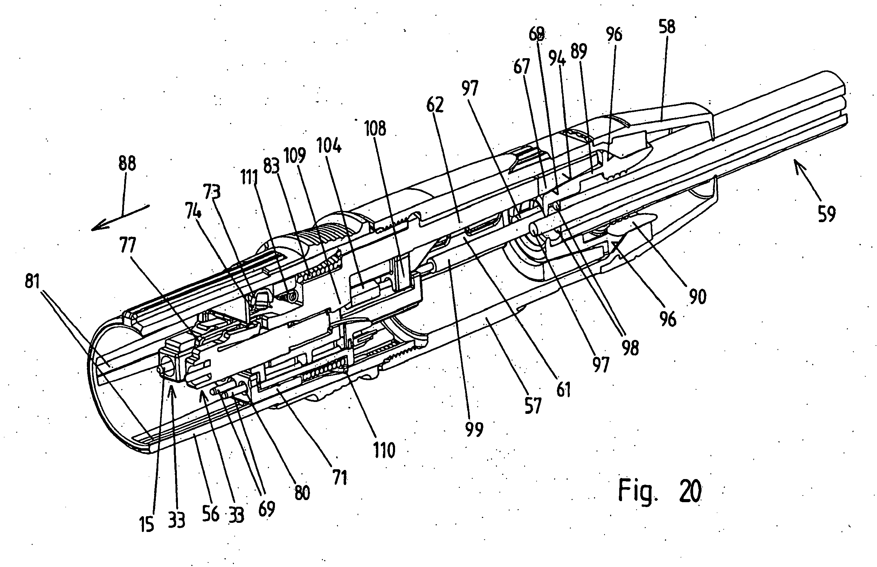

Das Verschiebeteil 71 besitzt eine Durchgangsöffnung 79. In seiner hinteren Verschiebeposition durchsetzt der jeweilige Kabelstecker 33 diese Durchgangsöffnung 79 vollständig und sein vorderer, in die Kabelstecker-Einstecköffnung 36 des Steckeraufnahmeteils 1 einzusteckender Abschnitt ragt aus dieser hervor. Weiters besitzt das Verschiebeteil 71 Durchgangsöffnungen 80 für die elektrischen Kontaktelemente 69. In der hinteren Verschiebeposition des Verschiebeteils 71 durchsetzen die elektrischen Kontaktelemente 69 diese Durchgangsöffnungen 80 vollständig und die als Kontaktstifte ausgebildeten Endabschnitte ragen aus den Durchgangsöffnungen 80 heraus (vgl. Fig. 19 und 20).

Die Führung des Verschiebeteils 71 in der Gehäusehülse 56 erfolgt über Längsnuten 81 an der Innenseite der Gehäusehülse 56 (die mit Abstand zum vorderen Ende der Gehäusehülse 56 enden) und in den Längsnuten 81 geführte Längsrippen 82 an der Außenseite des Verschiebeteils 71.

Zwischen dem Verschiebeteil 71 und der Fixiereinheit 60 ist eine als Schraubenfeder ausgebildete Feder 83 angeordnet, die das Verschiebeteil 71 in seine vordere Verschiebeposition beaufschlagt.

Es ist weiters eine Rasteinrichtung vorgesehen, um die Kabelstecker-Schutzeinheit 55 im in das Steckeraufnahmeteil 1 vollständig eingesteckten Zustand mit dem Steckeraufnahmeteil 1 zu verrasten. Hierfür geeignete Rasteinrichtungen sind bekannt, beispielsweise von elektrischen Steckverbindungen her. Im gezeigten Ausführungsbeispiel ist auf der Gehäusehülse 56 eine Zughülse 84 angeordnet. Dieser besitzt nach vorne sich erstreckende Arme 85. Die freien Enden der Arme 85 weisen nach außen abstehende als Rastelemente dienende Nasen 86 auf und wirken mit schrägstehenden Anlaufkanten 112 (Fig. 16) an der Gehäusehülse 56 zusammen.

Beim Einstecken der Kabelstecker-Schutzeinheit 55 in das Steckeraufnahmeteil 1 wird der vordere Gehäuseabschnitt der Kabelstecker-Schutzeinheit 55 in die Einstecköffnung 105 des Steckeraufnahmeteil eingesteckt, wobei die Rasteinrichtung verrastet. Im gezeigten Ausführungsbeispiel rasten hierbei die Nasen 86 in eine Nut an der Innenseite des Gehäuses 2 ein. Die Federn 7, 83 üben auf das Gehäuse 56, 57 der Kabeistecker-Schutzeinheit 55 eine entgegen der Einsteckrichtung 88 gerichtete Kraft auf, wodurch die Nasen 86 gegen die schrägen Anlaufkanten 112 der Gehäusehülse 56 gedrückt werden und dadurch im Eingriff mit der Nut 87 gehalten werden. Durch Zurückziehen der Zughülse entgegen der Einsteckrichtung 88 werden die Nasen 86 von den Anlaufkanten 112 weggezogen und können dadurch nach innen ausweichen, um außer Eingriff mit der Nut 87 zu gelangen. Die Rasteinrichtung ist dadurch gelöst.

Die Kabelstecker-Schutzeinheit weist eine Zugentlastungseinrichtung für das Kabel 59 auf. Diese umfasst eine Klemmschale, die im gezeigten Ausführungsbeispiel aus zwei voneinander getrennten Schalenteilen 89, 90 besteht, welche auf den Kabelmantel 92 von zwei gegenüberliegenden Seiten her aufgesetzt werden und im auf den Kabelmantel 92 aufgesetzten Zustand diesen umgeben. In einem anderen Ausführungsbeispiel könnten die Schalenteile 89, 90 auch beispielsweise durch ein Filmscharnier verbunden sein. Zumindest umgibt die Klemmschale 91 im aufgesetzten Zustand den Kabelmantel über seinen halben Umfang. Die Schalenteile 89, 90 weisen an ihren Innenseiten nach innen vorstehende Zacken 93 auf.

Die Klemmschale 91 besitzt eine in ihrem vorderen Bereich angeordnete nach außen gerichtete Oberfläche 94, deren Durchmesser sich von hinten nach vorne konisch verjüngt und die mit der Fläche 68 der Fixiereinheit 60 zusammenwirkt. Weiters besitzt die Klemmschale 91 eine hinter der Oberfläche 94 liegende nach außen gerichtete Oberfläche 95, deren Durchmesser sich von hinten nach vorne konisch vergrößert. Diese konische Oberfläche 95 wirkt mit einer konischen Oberfläche 96 zusammen, die an der Innenseite der Spannhülse 57 in der Nähe ihres hinteren Endes angeordnet ist.

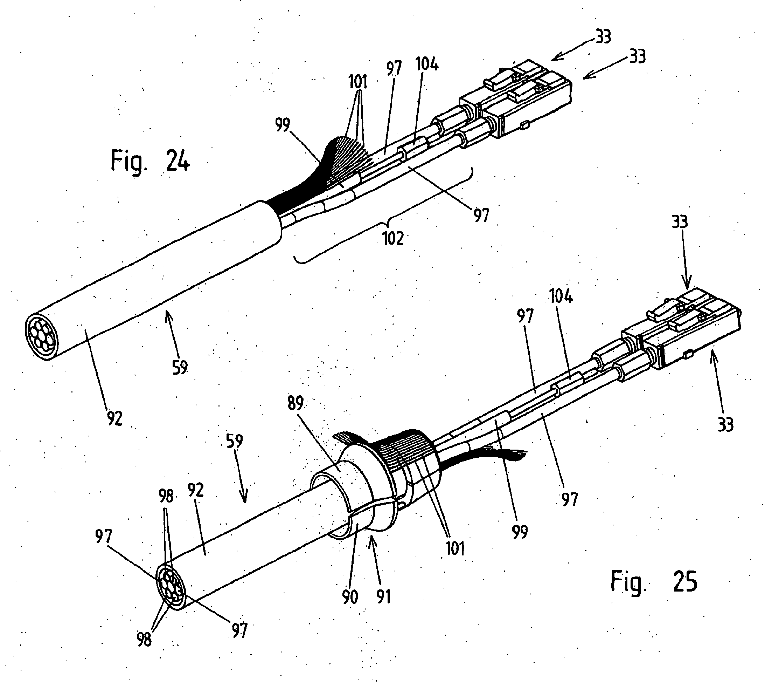

Im Folgenden wird die Montage der Komponenten erläutert. Das Kabel 59 weist im gezeigten Ausführungsbeispiel die beiden optischen Adern 97 und elektrische Adern 98 auf, im gezeigten Ausführungsbeispiel vier elektrische Adern (vgl. z. B. Fig. 24). In den Fig. 24 bis 27 sind die vorderen Abschnitte der elektrischen Adern 98 (ab dem Ende des Kabelmantels) der Übersichtlichkeit halber weggelassen. In den Fig. 18, 19, 20 sind der Übersichtlichkeit halber sowohl die optischen als auch die elektrischen Adern 97, 98 nach ihrem Austritt aus dem Kabelmantel abgeschnitten dargestellt.

Die elektrischen Adern 98 weisen in herkömmlicher Weise einen elektrischen Leiter (gebildet von einem Draht oder einer Mehrzahl von Litzen) und eine diesen umgebende Isolierung auf. Auch die optischen Adern 97 können in herkömmlicher Weise ausgebildet sein und umfassen einen Lichtleiter. Die optischen Adern 97 sind bereits an die Kabelstecker 33 angeschlossen, und zwar in einer Weise, wie dies bei der vorliegenden Steckernorm üblich ist.

Das Kabel 59 umfasst weiters ein mitgeführtes Stoßelement 99 zur Stabilisierung. Dieses weist in herkömmlicher Weise einen harten Kern (z. B. Glasfaserkern) und eine weiche Kunststoffummantelung auf. Weiters verlaufen zwischen dem Kabelmantel 92 und den Adern 97, 98 Fasern oder Fäden 101, beispielsweise Keflarfäden. Insgesamt umgeben die Fasern oder Fäden 101 die Adern 97, 98 ringförmig. An der Stelle, an der das Kabel in den Fig. 24 bis 26 geschnitten ist, sind diese Fäden der Übersichtlichkeit halber nicht dargestellt. In Fig. 24 ist aber am vorderen Ende des Kabelmantels ein Teil der aus dem Kabelmantel 92 herausragenden Fäden dargestellt. Tatsächlich sind um den gesamten inneren Umfang des Kabelmantels 92 solche Fäden 101 vorhanden.

Bei der Montage wird nun folgendermaßen vorgegangen: Das Kabel wird gerade abgeschnitten und die Spannhülse 57 mit der an ihr angebrachten Kabeltülle 58 wird auf das Kabel aufgeschoben. In der Folge wird der Kabelmantel 92 in einem Endabschnitt 102 entfernt. Im Folgenden werden in herkömmlicher Weise die Kabelstecker 33 montiert. Das Stoßelement 99 wird etwas gekürzt und in seinem Endabschnitt wird dessen Ummantelung entfernt. Auf den harten Kern 103 des Stoßelements 99 wird eine Crimphülse 104 aufgecrimpt. Die Klemmschale 91 wird auf den Kabelmantel 92 im Bereich von dessen vorderem Ende aufgesetzt. Die Kabelstecker 33 werden durch den Hülsenabschnitt 67 durchgeführt und die Klemmschale 91 wird in den Hülsenabschnitt 67 eingeschoben, wobei sich die Fasern bzw. Fäden 101 um das vordere Ende der Klemmschale 91 umlegen, wodurch sich eine Umlenkung ausbildet. Ein teil der Fäden 101 ist bereits in Fig. 25 zur Veranschaulichung im umgelegten Zustand dargestellt.

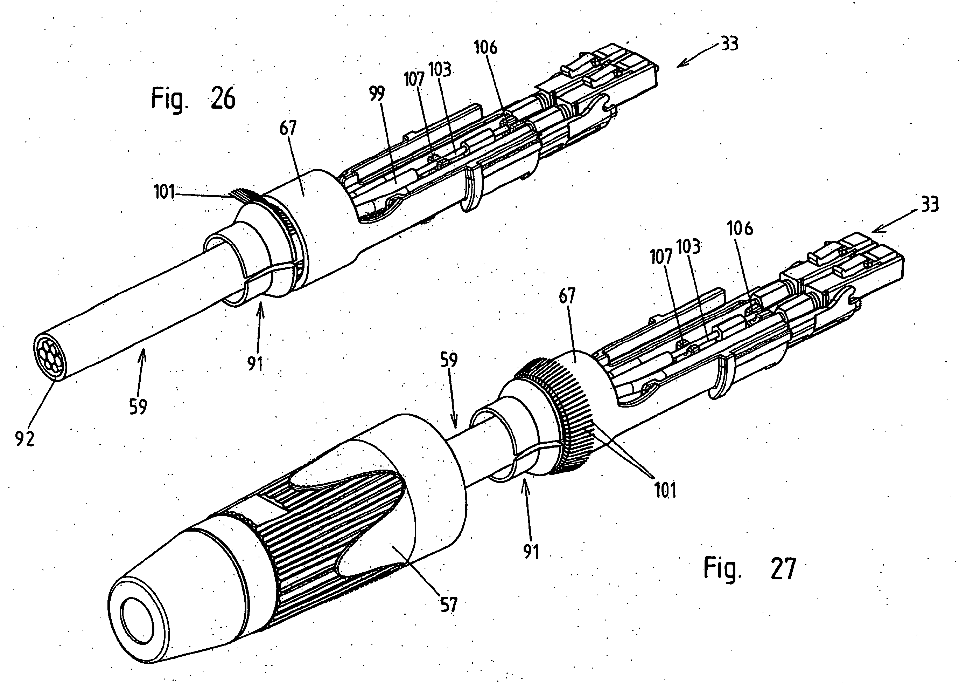

Die bereits durch den Hülsenabschnitt 67 des Unterteils 61 der Fixiereinheit 60 durchgeschobenen Kabelstecker 33 werden mit ihren Nasen 43 in die Nuten 63 eingesetzt. Der Bereich des freiliegenden Kerns 103 des Stoßelements 99 wird in die Gabeln 106, 107 des Unterteils 61 der Fixiereinheit 60 eingelegt, wobei die Crimphülse 104 im Bereich zwischen den Gabeln 106, 107 liegt, wie dies beispielsweise aus Fig. 26 ersichtlich ist. Die Enden der elektrischen Adern 98 werden abisoliert und an die elektrischen Kontaktelemente 69 angelötet. Die Spannhülse 57 wird nach Aufsetzen des Oberteils 62 der Fixiereinheit über die Fixiereinheit 60 nach vorne geschoben und auf die Gehäusehülse 56 aufgeschraubt. Hierbei legen sich die Fasern bzw. Fäden 101 um das hintere Ende des Hülsenabschnitts 67 um, wodurch sich eine zweite Umlenkung der Fäden bildet. In Fig. 27 ist diese Umlenkung zur Veranschaulichung bereits vor dem Überschieben der Spannhülse 57 dargestellt.

In die Gehäusehülse 56 wurden bereits zuvor das Verschiebeteil 71 mit der daran montierten Abdeckklappe 72 sowie die Feder 83 von hinten her eingeschoben, wobei eine letzte vergrößerte Windung der Feder 83 in eine innere Ringnut 110 der Gehäusehülse 56 einschnappt, damit sie nicht aus der Gehäusehülse 56 fallen kann, bevor der Montagevorgang abgeschlossen ist.

Es ist nunmehr der in Fig. 18 dargestellte montierte Zustand erreicht. In Fig. 18 ist hierbei nur symbolisch einer der Fäden 101 dargestellt, wobei die doppelte Umlenkung ersichtlich ist. Durch das Aufschrauben der Spannhülse 57 werden die Zacken 93 der Klemmschale 91 durch die zusammenwirkenden Flächen in den Kabelmantel gedrückt, wodurch die Verdrehsicherung des Kabels 59 erreicht wird. Durch das Aufschrauben der Spannhülse 57 wird die Klemmschale 91 weiters nach vorne gedrückt, wodurch sich die zusammenwirkenden Flächen der Klemmschale und des Abschnitts 67 aneinander anlegen und die dazwischenlaufenden Fäden geklemmt werden. Durch die bevorzugte doppelte Umlenkung der Fäden 101 wird eine besonders effektive Zugsicherung für das Kabel 59 erzielt.

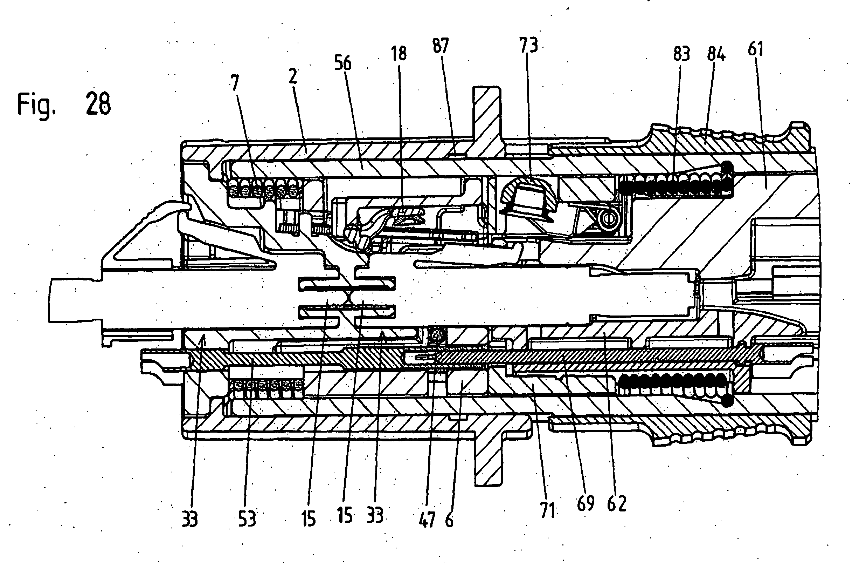

Beim Einstecken der Einheit bestehend aus Kabelstecker-Schutzeinheit 55 und Kabelsteckern 33 in das Steckeraufnahmeteil 1 wird das Verschiebeteil 71 der Kabelstecker-Schutzeinheit in die hintere Verschiebeposition entsprechend den Fig. 19 und 20 verschoben, wobei sich die Abdeckklappe 72 öffnet und die vorderen Abschnitte der Kabelstecker 33 aus dem Verschiebeteil 71 herausragen. Das Verschiebeteil 6 des Steckeraufnahmeteils 1 wird ebenfalls in die hintere Verschiebeposition entsprechend Fig. 9 verschoben, wobei sich die Verschlussklappe 16 öffnet (Verschwenkung in ihre passive Stellung). Der zusammengesteckte Zustand ist aus Fig. 28 ersichtlich, wobei auch in die jeweilige rückseitige Kabelstecker-Einstecköffnung 36 des Steckeraufnahmeteils 1 ein Kabelstecker 33 eingesteckt ist. Die Kabelstecker-Schutzeinheit 55 ist hierbei in der beschriebenen Weise mit dem Steckeraufnahmeteil 1 verrastet.

Neben den genannten Modifikationen sind unterschiedliche weitere Modifikationen des beschriebenen Ausführungsbeispiels der Erfindung denkbar und möglich, ohne den Bereich der Erfindung zu verlassen.

### Legende

### zu den Hinweisziffern:

- 1: Steckeraufnahmeteil
- 2: Gehäuse
- 3: Montageflansch
- 4: Einsatzteil
- 5: Längsachse
- 6: Verschiebeteil
- 7: Feder
- 8: Federanschlag
- 9: Arm
- 10: Längsnut
- 11: Anschlag
- 12: Montageanschlag
- 13: Lagerhülse
- 14: Zentrierhülse
- 15: Ferrule
- 16: Verschlussklappe
- 17: Ferrulen-Einstecköffnung
- 18: Verschlussteil
- 19: Dichtung
- 20: Achsbolzen
- 21: erster Hebelarm
- 22: zweiter Hebelarm
- 23: Betätigungselement
- 24: Armfortsatz
- 25: Gabelfortsatz
- 26: Gabelfortsatz
- 59: Kabel
- 60: Fixiereinheit
- 61: Unterteil
- 62: Oberteil
- 63: Nut
- 64: Längsachse
- 65: Hakenelement
- 66: Hakenelement
- 67: Abschnitt
- 68: Fläche
- 69: elektrisches Kontaktelement
- 70: Deckel
- 71: Verschiebeteil
- 72: Abdeckklappe
- 73: Abdeckteil
- 74: Dichtung
- 75: Achszapfen
- 76: Halterungsteil
- 77: Betätigungselement
- 78: Mittelsteg
- 79: Durchgangsöffnung
- 80: Durchgangsöffnung
- 81: Längsnut
- 82: Längsrippe
- 83: Feder
- 84: Zughülse
- 27: Aufnahmenut
- 28: Halteblech
- 29: Ausnehmung
- 30: Zapfen
- 31: Rastelement
- 32: Rastelement
- 33: Kabelstecker
- 34: Gehäuse
- 35: Kabelstecker-Einstecköffnung
- 36: Kabelstecker-Einstecköffnung
- 37: Vorderseite
- 38: Rückseite
- 39: Öffnung
- 40: Ende des Lichtleiters
- 41: Klammer
- 42: Rastarm
- 43: Nase
- 44: Kanal
- 45: Mittelsteg
- 46: Kabelstecker-Einsteckkanal
- 47: Blockierglied
- 48: Kulissenbahn
- 49: Kulissenbahn
- 50: Schlitz
- 51: Kabelstecker-Einsteckkanal
- 52: Ferrulen-Einstecköffnung
- 53: elektrisches Kontaktelement
- 54: Kanal
- 55: Kabelstecker-Schutzeinheit
- 56: Gehäusehülse
- 57: Spannhülse
- 58: Kabeltülle
- 85: Arm
- 86: Nase
- 87: Nut
- 88: Einsteckrichtung
- 89: Schalenteil
- 90: Schalenteil
- 91: Klemmschale
- 92: Kabelmantel
- 93: Zacke
- 94: Oberfläche
- 95: Oberfläche
- 96: Oberfläche
- 97: optische Ader
- 98: elektrische Ader
- 99: Stoßelement
- 100: Betätigungsarm
- 101: Faden
- 102: Abschnitt
- 103: Kern
- 104: Crimphülse
- 105: Einstecköffnung
- 106: Gabel
- 107: Gabel
- 108: Gabel
- 109: Abdeckelement
- 110: Ringnut
- 111: Feder
- 112: Anlaufkante
- 113: einsteckseitiges Ende

## Patentansprüche

1. Kabelstecker-Schutzeinheit, die ein Gehäuse (56, 57) aufweist und auf mindestens einem an einem optischen Kabel oder einer optischen Ader (97) eines Kabels (59) angeschlossenen optischen Kabelstecker (33), insbesondere LC-Kabelstecker, montierbar ist, mit welchem zusammen mit einem Steckeraufnahmeteil (1) eine nur vom mindestens einen Kabelstecker (33) und Steckeraufnahmeteil (1) gebildete optische Steckverbindung zur optischen Verbindung von zwei Lichtleitern herstellbar ist, wobei ein vorderer Abschnitt des Kabelsteckers (33) in das Steckeraufnahmeteil (1) zur Herstellung der optischen Verbindung einsteckbar ist, und wobei die Kabelstecker-Schutzeinheit (55) weiters eine in das Gehäuse (56, 57) eingesetzte Fixiereinheit (60) aufweist, in der der mindestens eine Kabelstecker (33) in einer Position fixierbar ist, in welcher sein vorderer Abschnitt über die Fixiereinheit (60) vorsteht, wobei ein vorderer Abschnitt des Gehäuses (56, 57) den über die Fixiereinheit (60) vorstehenden vorderen Abschnitt des Kabelstecker (33) umgibt, **dadurch gekennzeichnet, dass** die Kabelstecker-Schutzeinheit weiters ein im Gehäuse (56, 57) angeordnetes, in achsialer Richtung des Gehäuses zwischen einer vorderen und einer hinteren Verschiebeposition verschiebbar geführtes Verschiebeteil (71) und eine um eine Schwenkachse verschwenkbare Abdeckklappe (72) aufweist, die durch eine Verschiebung des Verschiebeteils (71) zwischen seiner vorderen und seiner hinteren Verschiebeposition zwischen einer aktiven Stellung, in der sie die Ferrule (15) mindestens eines in der Kabelstecker-Schutzeinheit montierten Kabelsteckers (33) abdeckt, und einer passiven Stellung, in der sie die Ferrule (15) des mindestens einen Kabelsteckers (33) freigibt, verschiebbar ist.

2. Kabelstecker-Schutzeinheit nach Anspruch 1, **dadurch gekennzeichnet, dass** die Abdeckklappe (72) am Verschiebeteil (71) verschwenkbar gelagert ist und von einem an der Fixiereinheit (60) angeordneten Betätigungselement (77) verschwenkbar ist.

3. Kabelstecker-Schutzeinheit nach Anspruch 1 oder Anspruch 2, **dadurch gekennzeichnet, dass** das Verschiebeteil (71) eine Durchgangsöffnung (79) aufweist, wobei in der hinteren Verschiebeposition des Verschiebeteils (71) der vordere Abschnitt des mindestens einen Kabelsteckers (33) auf der Vorderseite des Verschiebeteils (71) aus der Durchgangsöffnung (79) herausragt.

4. Kabelstecker-Schutzeinheit nach einem der Ansprüche 1 bis 3, **dadurch gekennzeichnet, dass** zwischen dem Verschiebeteil (71) und der Fixiereinheit (60) eine das Verschiebeteil in seiner vorderen Verschiebeposition beaufschlagende Feder (83) angeordnet ist.

5. Kabelstecker-Schutzeinheit nach einem der Ansprüche 1 bis 4, **dadurch gekennzeichnet, dass** die Abdeckklappe durch eine Feder (111) in ihre aktive Verschwenkstellung beaufschlagt ist.

6. Kabelstecker-Schutzeinheit nach einem der Ansprüche 1 bis 5, **dadurch gekennzeichnet, dass** die Abdeckklappe (72) mindestens ein Abdeckteil (73) zur Abdeckung der Ferrule (15) des mindestens einen Kabelsteckers (33) aufweist, wobei das Abdeckteil (73) eine Dichtung (74) aus einem elastomeren Material zur staubdichten Abdeckung der Ferrule (15) aufweist.

7. Kabelstecker-Schutzeinheit nach einem der Ansprüche 1 bis 6 **dadurch gekennzeichnet, dass** die Fixiereinheit (60) ein Unterteil (61) und ein Oberteil (62) umfasst, zwischen die der mindestens eine Kabelstecker (33) einsetzbar ist.

8. Kabelstecker-Schutzeinheit nach Anspruch 7, **dadurch gekennzeichnet, dass** das Unterteil (61) und das Oberteil (62) über Hakenelemente (65, 66) ineinander einhängbar sind und dass sie vorzugsweise miteinander verrastbar sind.

9. Kabelstecker-Schutzeinheit nach Anspruch 7 oder Anspruch 8, **dadurch gekennzeichnet, dass** für die Positionierung des mindestens einen Kabelsteckers (33) in der Fixiereinheit (60) im Unterteil (61) der Fixiereinheit (60) Nuten (63) zur Aufnahme von Nasen (43) des jeweiligen Kabelsteckers (33) ausgebildet sind.

10. Kabelstecker-Schutzeinheit nach einem der Ansprüche 1 bis 9, **dadurch gekennzeichnet, dass** die Kabelstecker-Schutzeinheit mindestens ein Rastelement (86) zur Verrastung mit einem Steckeraufnahmeteil (1) im in das Steckeraufnahmeteil (1) eingesteckten Zustand aufweist.

11. Kabelstecker-Schutzeinheit nach Anspruch 10, **dadurch gekennzeichnet, dass** das mindestens eine Rastelement von einer Nase (86) am vorderen Ende eines Arms (85) einer auf dem Gehäuse angeordneten Zughülse (84) gebildet wird.

12. Kabelstecker-Schutzeinheit nach einem der Ansprüche 1 bis 11, **dadurch gekennzeichnet, dass** die Kabelstecker-Schutzeinheit eine Kabelzugentlastungseinrichtung für ein zumindest an den mindestens einen Kabelstecker 33 angeschlossenes Kabel (59) aufweist.

13. Kabelsteclcer-Schutzeineinheit nach Anspruch 12, **dadurch gekennzeichnet, dass** das Gehäuse eine vordere Gehäusehülse (56) und eine auf das hintere Ende der Gehäusehülse (56) aufgeschraubte Spannhülse (57) aufweist, welche mit einer den Kabelmantel (92) des Kabels (59) umgebenden Klemmschale (91) zur Anpressung der Klemmschale (91) an den Kabelmantel (92) zusammenwirkt.

14. Kabelstecker-Schutzeinheit nach Anspruch 13, **dadurch gekennzeichnet, dass** Zugelemente (101) des Kabels um das vordere Ende der Klemmschale (91) umgeschlagen sind und hierbei eine Umlenkung zwischen einem Verlauf in Richtung zum einsteckseitigen Ende der Kabelstecker-Schutzeinheit und einem vom einsteckseitigen Ende weggerichteten Verlauf aufweisen, wobei sie im der Umlenkung folgenden Abschnitt ihres Verlaufs zumindest an einer Stelle zwischen zwei Teilen der Kabelstecker-Schutzeinheit eingeklemmt sind.

15. Kabelstecker-Schutzeinheit nach Anspruch 14, **dadurch gekennzeichnet, dass** die Zugelemente (101) um das rückseitige Ende eines Hülsenabschnitts (67) ein weiteres Mal umgelenkt sind, wobei sie vor der Umlenkung einen vom einsteckseitigen Ende weggerichteten Verlauf und nach der Umlenkung einen zum einsteckseitigen Ende gerichteten Verlauf aufweisen.

## Claims

1. A cable connector protection unit, which comprises a housing (56, 57) and may be mounted on at least one optical cable connector (33), in particular an LC cable connector, connected to an optical cable or an optical strand (97) of a cable (59), with which cable connector (33), together with a connector receptacle (1), an optical plug-in connection formed merely from at least one cable connector (33) and connector receptacle (1) may be provided for optical connection of two light guides, a front portion of the cable connector (33) being insertable into the connector receptacle (1) to produce the optical connection, the cable connector protection unit (55) additionally comprising a fixing unit (60) inserted into the housing (56, 57), in which fixing unit (60) the at least one cable connector (33) may be fixed in a position in which its front portion projects beyond the fixing unit (60), a front portion of the housing (56, 57) surrounding the front portion of the cable connector (33) projecting beyond the fixing unit (60), **characterised in that** the cable connector protection unit additionally comprises a displaceable element (71) arranged in the housing (56, 57) and guided displaceably in the axial direction of the housing between a front and a rear displacement position and a cover flap (72) swivellable about a swivel axis, which cover flap (72) is displaceable, through displacement of the displaceable element (71) between its front and rear displacement positions, between an active position, in which it covers the ferrule (15) of at least one cable connector (33) mounted in the cable connector protection unit, and a passive position, in which it releases the ferrule (15) of the at least one cable connector (33).

2. A cable connector protection unit according to claim 1, **characterised in that** the cover flap (72) is mounted swivellably on the displaceable element (71) and may be swivelled by an actuating element (77) arranged on the fixing unit (60).

3. A cable connector protection unit according to claim 1 or claim 2, **characterised in that** the displaceable element (71) comprises a passage opening (79), the front portion of the at least one cable connector (33) on the front of the displaceable element (71) projecting out of the passage opening (79) when the displaceable element (71) is in the rear displacement position.

4. A cable connector protection unit according to any one of claims 1 to 3, **characterised in that** a spring (83) loading the displaceable element in its front displacement position is arranged between the displaceable element (71) and the fixing unit (60).

5. A cable connector protection unit according to any one of claims 1 to 4, **characterised in that** the cover flap is loaded by a spring (111) into its active swivel position.

6. A cable connector protection unit according to any one of claims 1 to 5, **characterised in that** the cover flap (72) comprises at least one cover element (73) for covering the ferrule (15) of the at least one cable connector (33), the cover element (73) comprising a seal (74) of an elastomeric material for covering the ferrule (15) in dust-tight manner.

7. A cable connector protection unit according to any one of claims 1 to 6, **characterised in that** the fixing unit (60) comprises a lower part (61) and an upper part (62), between which the at least one cable connector (33) may be inserted.

8. A cable connector protection unit according to claim 7, **characterised in that** the lower part (61) and the upper part (62) may be fitted in one another by hook elements (65, 66) and **in that** they may preferably be latched together.

9. A cable connector protection unit according to claim 7 or claim 8, **characterised in that** grooves (63) for receiving lugs (43) of the respective cable connector (33) are provided in the lower part (61) of the fixing unit (60) for positioning of the at least one cable connector (33) in the fixing unit (60).

10. A cable connector protection unit according to any one of claims 1 to 9, **characterised in that** the cable connector protection unit comprises at least one latching element (86) for latching together with a connector receptacle (1) when inserted into the connector receptacle (1).

11. A cable connector protection unit according to claim 10, **characterised in that** the at least one latching element is formed by a lug (86) at the front end of an arm (85) of a pull sleeve (84) arranged on the housing.

12. A cable connector protection unit according to any one of claims 1 to 11, **characterised in that** the cable connector protection unit comprises a cable strain relief means for a cable (59) connected at least to the at least one cable connector (33).

13. A cable connector protection unit according to claim 12, **characterised in that** the housing comprises a front housing sleeve (56) and a clamp sleeve (57) screwed onto the rear end of the housing sleeve (56), which clamp sleeve (57) cooperates with a clamp shell (91) surrounding the cable sheath (92) of the cable (59) to press the clamp shell (91) against the cable sheath (92).

14. A cable connector protection unit according to claim 13, **characterised in that** the pull elements (101) of the cable are turned up around the front end of the clamp shell (91) and are here deflected between a course directed towards the insertion end of the cable connector protection unit and a course directed away from the insertion end, their being clamped at least at a point between two parts of the cable connector protection unit in the portion of their course following the deflection.

15. A cable connector protection unit according to claim 14, **characterised in that** the pull elements (101) are deflected a further time around the rear end of a sleeve portion (67), their having a course directed away from the insertion end before deflection and a course directed towards the insertion end after deflection.

## Revendications

1. Unité de protection de connecteur de câble, qui comprend un boîtier (56, 57) et qui peut être montée sur au moins un connecteur de câble optique (33), en particulier un connecteur de câble LC, raccordé à un câble optique ou à une fibre optique (97) d'un câble (59), avec lequel un raccordement optique enfichable formé seulement par cet au moins un connecteur de câble (33) et une partie de réception de connecteur (1) peut être réalisé avec une partie de réception de connecteur (1) pour le raccordement optique de deux guides de lumière, dont une partie avant du connecteur de câble (33) peut être enfichée dans la partie de réception de connecteur (1) pour réaliser le raccordement optique, et avec vue dans lequel l'unité de protection de connecteur de câble (55) comprenant en outre une unité de fixation (60) introduite dans le boîtier (56, 57), dans laquelle cet au moins un connecteur de câble (33) peut être fixé dans une position dans laquelle sa partie avant dépasse de l'unité de fixation (60), alors qu'une partie avant du boîtier (56, 57) entoure une partie avant du connecteur de câble (33) dépassant de l'unité de fixation (60),
**caractérisée en ce que**
l'unité de protection de connecteur de câble comprend en outre une pièce coulissante (71) guidée dans le boîtier (56, 57) en direction axiale du boîtier entre des positions de déplacement avant et arrière, et un clapet de recouvrement (72) pouvant pivoter autour d'un axe de pivotement, et qui peut par un déplacement de la pièce coulissante (71) entre sa position de déplacement avant et sa position de déplacement arrière, coulisser entre une position active dans laquelle il recouvre une bague (15) d'au moins un connecteur de câble (33) monté dans l'unité de protection de connecteur de câble, et une position passive dans laquelle il libère la bague (15) de cet au moins un connecteur de câble (33).

2. Unité de protection de connecteur de câble selon la revendication 1,
**caractérisée en ce que**
le clapet de recouvrement (72) est monté pivotant sur la pièce coulissante (71) et peut pivoter au moyen d'un élément d'actionnement (77) disposé sur l'unité de fixation (60).

3. Unité de protection de connecteur de câble selon la revendication 1 ou la revendication 2,
**caractérisée en ce que**
la pièce coulissante (71) présente une ouverture de passage (79), dans laquelle la partie avant de l'au moins un connecteur de câble (33) dépasse sur la face avant de la pièce coulissante (71) à travers l'ouverture de passage (79) lorsque la pièce coulissante (71) se trouve dans sa position de déplacement arrière.

4. Unité de protection de connecteur de câble selon l'une quelconque des revendications 1 à 3,
**caractérisée en ce qu'**
un ressort (83) agissant sur la pièce coulissante dans sa position de déplacement avant est disposé entre la pièce coulissante (71) et l'unité de fixation (60).

5. Unité de protection de connecteur de câble selon l'une quelconque des revendications 1 à 4,
**caractérisée en ce que**
le clapet de recouvrement est sollicité par un ressort (111) dans sa position de pivotement active.

6. Unité de protection de connecteur de câble selon l'une quelconque des revendications 1 à 5,
**caractérisée en ce que**
le clapet de recouvrement (72) comprend au moins une partie de recouvrement (73) pour recouvrir la bague (15) de l'au moins un connecteur de câble (33), et la partie de recouvrement (73) comporte un joint d'étanchéité (74) en une matière élastomère pour le recouvrement étanche aux poussières de la bague (15).

7. Unité de protection de connecteur de câble selon l'une quelconque des revendications 1 à 6,
**caractérisée en ce que**
l'unité de fixation (60) comprend une partie inférieure (61) et une partie supérieure (62), entre lesquelles l'au moins un connecteur de câble (33) peut être engagé.

8. Unité de protection de connecteur de câble selon la revendication 7,
**caractérisée en ce que**
la partie inférieure (61) et la partie supérieure (62) peuvent être accrochées l'une dans l'autre au moyen d'éléments en crochet (65, 66) et de préférence encliquetées l'une avec l'autre.

9. Unité de protection de connecteur de câble selon la revendication 7 ou la revendication 8,
**caractérisée en ce que**
des rainures (63) destinées à recevoir des ergots (43) du connecteur de câble respectif (33) sont réalisées dans la partie inférieure (61) de l'unité de fixation (60) en vue du positionnement de cet au moins un connecteur de câble (33) dans l'unité de fixation (60).

10. Unité de protection de connecteur de câble selon l'une quelconque des revendications 1 à 9,
**caractérisée en ce que**
l'unité de protection de connecteur de câble comprend au moins un élément d'encliquetage (86) pour s'encliqueter avec une partie de réception de connecteur (1) dans l'état enfiché dans la partie de réception de connecteur (1).

11. Unité de protection de connecteur de câble selon la revendication 10,
**caractérisée en ce que**
l'au moins un élément d'encliquetage est formé par un ergot (86) sur l'extrémité avant d'un bras (85) d'une douille de traction (84) disposée sur le boîtier.

12. Unité de protection de connecteur de câble selon l'une quelconque des revendications 1 à 11,
**caractérisée en ce que**
l'unité de protection de connecteur de câble comporte un dispositif de soulagement de la traction du câble pour un câble (56) au moins raccordé à cet au moins un connecteur de câble (33).

13. Unité de protection de connecteur de câble selon la revendication 12,
**caractérisée en ce que**
le boîtier comprend une douille de boîtier avant (56) et une douille de serrage (57) vissée sur l'extrémité arrière de la douille de boîtier (56), et qui coopère avec une coque de serrage (91) entourant l'enveloppe (92) du câble (59) pour presser la coque de serrage (91) sur l'enveloppe de câble (92).

14. Unité de protection de connecteur de câble selon la revendication 13,
**caractérisée en ce que**
des éléments de traction (101) du câble sont enroulés autour de l'extrémité avant de la coque de serrage (91) et présentent en l'occurrence une déviation entre un trajet en direction de l'extrémité côté enfichage de l'unité de protection de connecteur de câble et un trajet s'éloignant de l'extrémité côté enfichage, dans laquelle ils sont coincés en au moins un endroit entre deux parties de l'unité de protection de connecteur de câble, dans une partie de leur trajet suivant la déviation.

15. Unité de protection de connecteur de câble selon la revendication 14,
**caractérisée en ce que**
les éléments de traction (101) sont déviés une nouvelle fois autour de l'extrémité arrière d'une partie de douille (67), et présentent avant la déviation un trajet s'éloignant de l'extrémité côté enfichage et après la déviation un trajet dirigé vers l'extrémité côté enfichage.
